# EUROPEAN PATENT SPECIFICATION

(11) **EP 3 210 805 B1**
(45) Date of publication and mention of the grant of the patent: **07.11.2018**
(21) Application number: 17155117.9
(22) Date of filing: 08.02.2017
(51) Int. Cl.: B60H 1/00

(54) **VEHICLE AIR-CONDITIONING APPARATUS**
FAHRZEUGKLIMAANLAGE
APPAREIL DE CLIMATISATION DE VÉHICULE

(30) Priority: 24.02.2016 JP 2016032979
(43) Date of publication of application: 30.08.2017
(73) Proprietor: Valeo Japan Co., Ltd., Saitama 360-0193 (JP)
(72) Inventor: KOIKE, Takao, Saitama 360-0193 (JP); HAYASHI, Naoto, Saitama 360-0193 (JP)
(74) Representative: Metz, Gaëlle

(56) References cited:
- JP-A- 10 100 642
- JP-A- 2002 274 163
- JP-A- 2007 083 956
- JP-A- 2007 099 056
- US-A- 5 954 578

## Description

### BACKGROUND OF INVENTION

### 1. Field of the Invention

The present invention relates to an air-conditioning apparatus that is to be mounted on a vehicle.

### 2. Description of the Related Art

A vehicle air-conditioning apparatus is configured to flow air into an internal space of a unit case, condition the temperature thereof, then blow out the conditioned air into a vehicle cabin, and in some cases, sucks rainwater, mist, snow, and the like existing outside the vehicle. In addition, in the course of temperature conditioning, there may be a case where air is cooled by operating an evaporator, which is disposed in the internal space, so that condensed water may be generated.

When the unit case is configured to be, for example, a vertically partitioned type, which allows the case to be divided into left and right pieces, a vertical parting plane is formed. Therefore, the unit case requires a special design that prevents rainwater or condensed water from leaking from a bottom portion of the unit case. In view of this point, as disclosed in Patent Literature 1, for example, a configuration having a depression/projection joint portion that holds a rod-shaped sealing member in a compressed manner in a lower portion of the unit case at a portion where condensed water may be pooled is known.

According to Patent Literature 1, the depression/projection joint portion includes remaining voids that cannot be filled with the sealing member in addition to the compressed rod-shaped sealing member. Therefore, if condensed water enters the unit case and an internal pressure therein is increased, the water that has entered the voids may reach an end of the sealing member disposed above the portion where the condensed water is pooled. In addition, according to Patent Literature 1, the water which has lost a way to go may proceed around a distal end of the sealing member and leak from the joint portion between the left and right pieces of the unit case to an outer wall side. In order to avoid such a leak, a configuration including communicating portions that communicate the internal space of the unit case with the voids at both end portions of a holding depressed groove, which is a part of the depression/projection joint portion for holding the sealing member, is proposed. With the communicating portions configured in this manner, even though the internal pressure in the unit case rises, a pressure that acts on both ends of the water pooled between the communicating portions may be regulated to the same pressure as the internal pressure of the unit case. Therefore, the water entering the voids is prevented from reaching the end of the sealing member.

### 3. Patent Literature

Patent Literature 1 : JP Patent No.4072301E Other examples are disclosed by JP2007099056, US5954578, JP10100642, JP2002274163 and JP2007099056.

### 4. Problem to be solved

However, in Patent Literature 1, the fact that the internal pressure in the unit case non-uniformly rises when the internal pressure rises is not considered. The condensed water is pooled across the evaporator from an upstream side to a downstream side thereof. Therefore, the pressure in the space is more likely to rise on the upstream side of a condenser in principle. However, when an opening degree of a blowout door disposed on the downstream side of the condenser is controlled, the pressure in a space on the downstream side of the evaporator may rise instantaneously. In this manner, even though the communicating portions are provided as in Japanese Patent No. 4072301, the internal pressure in the unit case may rise and drop non-uniformly, and thus the pressure that acts on both ends of the water pooled between the communicating portions cannot necessarily be the same pressure as the internal pressure of the unit case. Consequently, the water entering therebetween cannot be prevented completely from reaching the ends of the sealing member.

In addition, in Patent Literature 1, the rod-shaped sealing member is held in the interior of the holding depressed groove. Therefore, when an inspection is performed to check the presence of the sealing member after assembly of the vehicle air-conditioning apparatus has terminated in a production process, the presence of the sealing member cannot be recognized from outside of the unit case, and thus missing part may occur. Therefore, a configuration having leading holes that communicate the holding depressed groove with an outer wall surface of the unit case and leading out an end of the rod-shaped sealing member to the outer wall surface side of the unit case (the side of an external space) to enable a visual inspection is conceivable.

However, if the communication portions are provided at the end portions of the holding depressed grooves as in Patent Literature 1, the rise in internal pressure in the unit case is transferred to the holding depressed groove via the communication portions, and in addition, air leaks to the external space of the unit case through the leading holes. Consequently, the water entering the voids at this time may leak to the external space of the unit case through the leading holes.

### SUMMARY

It is an object of the invention to provide a vehicle air-conditioning apparatus that achieves easy inspection of missing of a sealing member by leading ends of a rod-shaped sealing member out to an external space of a unit case, in which water pooled in a holding depressed groove is prevented from leaking out to an outer wall surface side of the unit case even though an internal pressure in the unit case rises.

This disclosure provides a vehicle air-conditioning apparatus (1) including: a unit case (C) having an internal space (80) and formed by assembling a plurality of case members (10, 11) each including a vertical parting plane (10a, 11a); a joint portion (12) including a depressed groove (10b) provided on the parting plane (10a) of one of the case members (10) and a projecting portion (11b) provided on the parting plane (11a) of the other case member (11) and to be inserted into the depressed groove (10b); and a rod-shaped sealing member (30) disposed on a bottom portion (B) and in an interior of the joint portion in a compressed manner, in which the unit case (C) includes an output portion (50) that communicates the depressed groove with an external space (19) to the unit case, and leads ends (30a, 30b) of the rod-shaped sealing member out to the external space, and a communicating portion (40) that communicates the depressed groove with the internal space and is provided below the output portions.

Accordingly, the ends of the sealing member are led out to the external space of the unit case, inspection of missing of the sealing member is easily achieved. In addition, the communicating portion that communicates the depressed groove with the internal space of the unit case is provided below the output portion that leads the seal member out to the external space of the unit case. Therefore, even though water pooled in a bottom portion of the unit case runs in the depressed groove due to the rise in internal pressure in the unit case and is guided upward along the sealing member, the water reaches the depressed groove provided below, that is, on the upstream side of the output portions first. The water guided upward is discharged into the internal space of the unit case through the communicating portion, so that the water pooled in the depressed groove may be prevented from leaking to the external space.

Preferably, the communicating portion includes a communicating portion on one side (40a) provided on one side of the bottom portion of the joint portion and a communicating portion on the other side (40b) provided on the other side thereof, and the communicating portion on one side has higher ventilation resistance than the communicating portion on the other side.

Even though the pressure in the internal space of the unit case rises, it does not necessarily rise uniformly. Therefore, if the water pooled in the depressed groove moves upward of the unit case due to the rise of the pressure in the internal space, the direction that the water moves with respect to the bottom portion of the unit case is unknown. However, according to the configuration described above, since the ventilation resistance at the communicating portion on one side is set to be higher than that at the communicating portion on the other side, a change in water level through the communicating portion on the other side may be made more sensitive, so that the water level rises toward the communicating portion on one side. In this configuration, even though the rise in pressure in the internal space is not uniform, the water to be discharged into the internal space is always output through the communicating portion on one side. Accordingly, an improvement of the quality is achieved.

Preferably, the communicating portion includes the communicating portion on one side (40a) provided on one side of the bottom portion of the joint portion and the communicating portion on the other side (40b) provided on the other side thereof, and the communicating portion on one side is provided below the communicating portion on the other side. In this configuration, since the communicating portion on one side is provided below the communicating portion on the other side, the water to be discharged into the internal space is always output through the communicating portion on one side even though the rise in pressure in the internal space is not uniform. Accordingly, a quality improvement is achieved.

Preferably, the output portion includes an output portion on the other side (50b) provided on the other side of the bottom portion of the joint portion and the communicating portion includes the communicating portion on one side (40a) provided on one side of the bottom portion of the joint portion, and the communicating portion on one side is provided below the output portion on the other side. Even though the communicating portion cannot be provided on the other side of the bottom portion of the joint portion from some reasons, a level difference between a surface of the water pooled in the bottom portion of the unit case and the output portion may be set to be large enough by providing the communicating portion on one side below the output portion on the other side even when the water pooled in the depressed groove rises toward the other side of the parting plane, so that the water may be prevented from leaking out to the external space.

Preferably, the output portion includes an output portion on one side (50a) provided on one side of the bottom portion of the joint portion and the output portion on the other side (50b) provided on the other side thereof, and the communicating portion includes the communicating portion on one side (40a) provided on one side of the bottom portion of the joint portion and the communicating portion on the other side (40b) provided on the other side thereof, the communicating portion on one side is provided below the output portion on one side, and the communicating portion on the other side is provided below the output portion on the other side. Irrespective of the direction in which the water pooled in the depressed groove rises due to a rise in pressure in the unit case, either to one side or to the other side with respect to the bottom of the parting plane, the water may be prevented from reaching the output portion.

Preferably, a portion between the output portion and the sealing member has a higher ventilation resistance than the communicating portion. Water rose in the depressed groove may be discharged further reliably into the internal space of the unit case.

Preferably, the joint portion and the sealing member define an inner void (S1) on the internal space side with respect to the sealing member, and the communicating portion is provided so as to communicate the inner void with the internal space.

The invention provides the vehicle air-conditioning apparatus that allows easy inspections of missing of the sealing member and prevents water from leaking into the external space of the unit case even though the internal pressure rises.

### BRIEF DESCRIPTION OF DRAWINGS

Fig. 1 is a schematic side view illustrating a side of a vehicle air-conditioning apparatus of a first embodiment of the invention;
Fig. 2 is a schematic front view illustrating part of a front of the vehicle air-conditioning apparatus of the first embodiment of the invention;
Fig. 3 is a partial explanatory drawing illustrating the vehicle air-conditioning apparatus of the first embodiment of the invention, in which an evaporator cover is removed from a portion indicated by a reference sign 1a in Fig. 1;
Fig. 4 is a perspective view illustrating a rod-shaped sealing member in Fig. 3;
Fig. 5 is an explanatory cross-sectional view taken along the line X-X in Fig. 3 with the evaporator cover added thereto;
Fig. 6 is an explanatory cross-sectional view taken along the line Y-Y in Fig. 3 with the evaporator cover added thereto;
Fig. 7 is a partial explanatory drawing illustrating a portion indicated by a reference sign E in Fig. 3 in an enlarged scale;
Fig. 8 is a schematic diagram illustrating the vehicle air-conditioning apparatus of the first embodiment of the invention;
Fig. 9 is a schematic diagram illustrating a comparative example for comparison with the invention;
Fig. 10 is a schematic diagram illustrating a vehicle air-conditioning apparatus of a second embodiment of the invention; and
Fig. 11 is a schematic diagram illustrating a vehicle air-conditioning apparatus of a third embodiment of the invention.

### DESCRIPTION OF EMBODIMENTS

Referring now to the attached drawings, a mode of the invention will be described. An embodiment described below is an example of the invention, and the invention is not limited to the following embodiment. In the specification and the drawings, components having identical reference signs indicate the same components. Various modifications may be made for achieving advantageous effects of the invention.

### First Embodiment

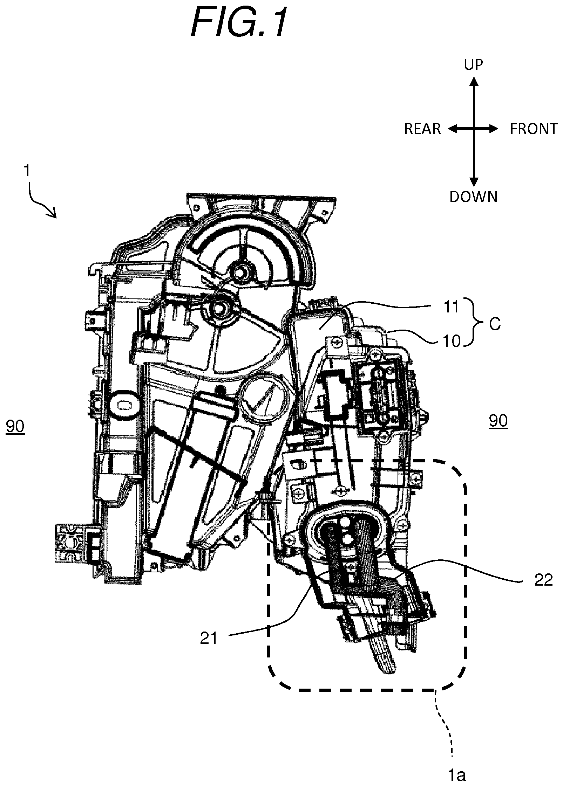

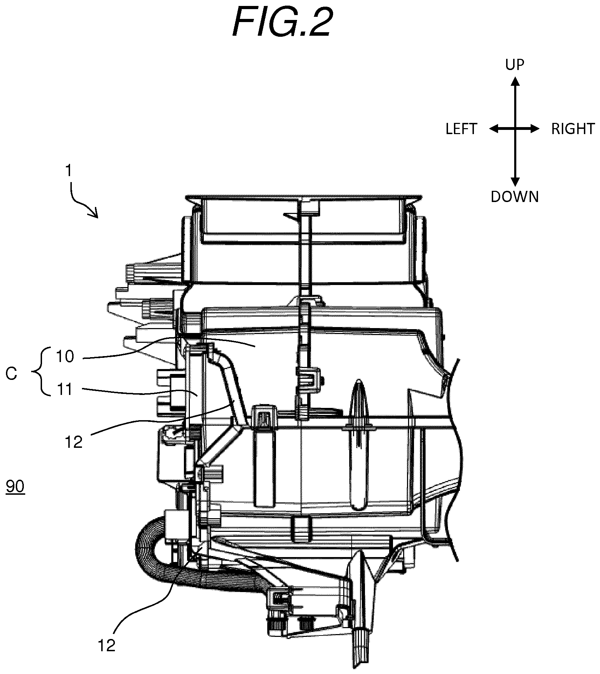

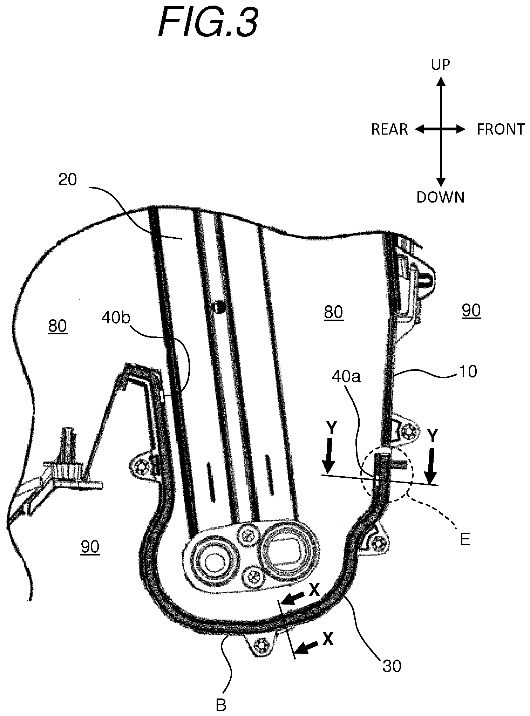

Fig. 1 to Fig. 3 all illustrate a vehicle air-conditioning apparatus 1 of a first embodiment of the invention. Fig. 1 is a schematic side view illustrating a side view, Fig. 2 is a schematic front view illustrating part of a front view, and Fig. 3 is a partial explanatory drawing of a portion indicated by a reference sign 1a in Fig. 1 with an evaporator cover 11 removed therefrom. The vehicle air-conditioning apparatus 1 of the first embodiment is configured to be mounted on a front portion of the vehicle, and includes a case member (case body) 10 and the case member (evaporator cover) 11. The evaporator cover 11 is mounted on the case body 10 to constitute a unit case C. The unit case C partitions between an internal space 80 and an external space 90. An evaporator 20 is disposed in the internal space 80 as illustrated in Fig. 3.

The vehicle air-conditioning apparatus 1 includes a blower apparatus (not illustrated). Air blown by the blower apparatus flows through the internal space 80, and is cooled down by the evaporator 20 in the course of being blown into a vehicle cabin.

Air flowing through the internal space is changed in pressure (static pressure, dynamic pressure) in the internal space 80 by effects of factors such as a pressure (ram pressure) of the outside air received while the vehicle is travelling, an operating state of the blower apparatus, and a state of wind distribution to be blown into the vehicle cabin. For example, in Fig. 3, since the evaporator 20 is a ventilation resistance member, the pressure of air on the upstream side of the evaporator 20 (right side of the evaporator 20 in the drawing) is generally higher than that of air on the downstream side of the evaporator 20 (left side of the evaporator 20 in the drawing). However, this relationship may be inverted depending on the effects of the factors described above, and the pressure of air on the downstream side of the evaporator 20 may become instantaneously higher.

The evaporator 20 is manufactured by a known process, and is formed of, for example, aluminum alloy or copper alloy. The evaporator 20 constitutes part of a refrigeration cycle. Coolant is supplied through a pipe 21, exchanges heat with air in the periphery, and is discharged through a pipe 22. The air after heat exchange with the evaporator 20 is cooled and generates condensed water. The condensed water flows downward of the evaporator 20, and is discharged to the external space 90 through a drain unit, which is not illustrated.

The case body 10 and the evaporator cover 11 are formed of a resin such as polypropylene or ABS, and is manufactured by an injection molding process. In the first embodiment, the case body 10 and the evaporator cover 11 include vertical parting planes (10a, 11a) respectively, and constitute the unit case C when the evaporator cover 11 is mounted on the case body 10. The case body 10 and the evaporator cover 11 constitute a joint portion 12, which will be described later.

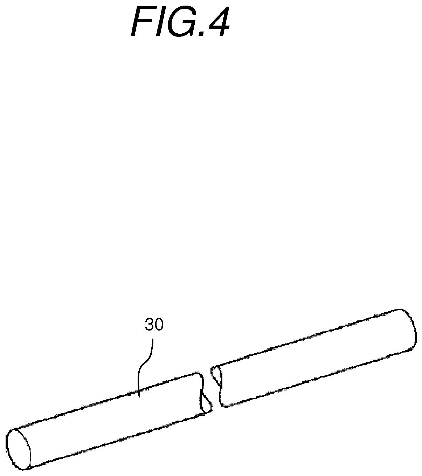

As illustrated in Fig. 3, condensed water generated by heat exchange flows from the evaporator 20 disposed in the internal space 80 of the case body 10, and is pooled on a bottom portion B of the joint portion. A rod-shaped sealing member 30 is disposed on the bottom portion B of the joint portion illustrated in Fig. 4 in a compressed manner, and prevents the condensed water from leaking to the external space of the unit case C. Examples of a material used for the sealing member include rubber having resiliency used in general in the vehicle air-conditioning apparatus such as NBR or EPDM.

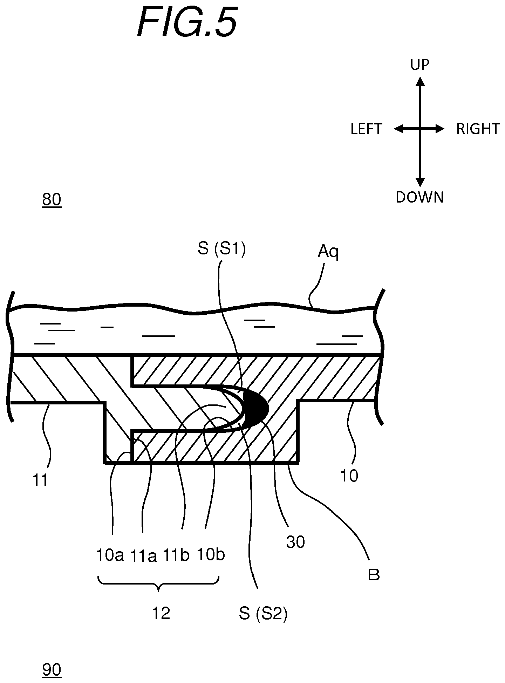

Fig. 5 is an explanatory cross-sectional view taken along the line X-X in Fig. 3 with the evaporator cover 11 added thereto. The case body 10 and the evaporator cover 11 are fixed by a known fixing device such as screws, bolts, or other means such as claw fittings, which are not illustrated. The case body 10 includes the vertical parting plane 10a, and a depressed groove 10b is provided in the interior of the parting plane 10a. The evaporator cover 11 includes the vertical parting plane 11a, and is provided with a projecting portion 11b projecting from the parting plane 11a. The projecting portion 11b is inserted into the depressed groove 10b, and constitutes the joint portion 12 by an abutment between the parting plane 10a and the parting plane 11a. The rod-shaped sealing member 30 is compressed by a distal end of the projecting portion 11b and the depressed groove 10b therebetween while being held in the depressed groove 10b. A void S is present in addition to the compressed sealing member 30 in the space between the depressed groove 10b and the projecting portion 11b. The void S includes an inner void S1 present on the internal space 80 side of the sealing member 30 and an outer void S2 present on the external space 90 side of the sealing member 30.

Rainwater flowing through the blower apparatus and condensed water and the like Aq flowing from the evaporator 20 are pooled on the bottom portion B of the joint portion. At the joint portion 12 where the parting plane 10a of the case body and the parting plane 11a of the evaporator cover are in abutment with each other, surface roughness to an extent that allows water molecules to move thereon exists, and thus the water reaches the inner void S1 coupled with a capillary action. Therefore, the internal pressure of the internal space 80 rises, and when a pressure is applied to the rainwater or the condensed water and the like Aq flowed from the evaporator 20, a volume of water that may enter the inner void S1 increases and a water level rises upward along the inner void S1. In contrast, since the sealing member 30 is compressed between the depressed groove 10b and the projecting portion 11b, the water does not reach the outer void S2, and thus is prevented from leaking to the external space 90.

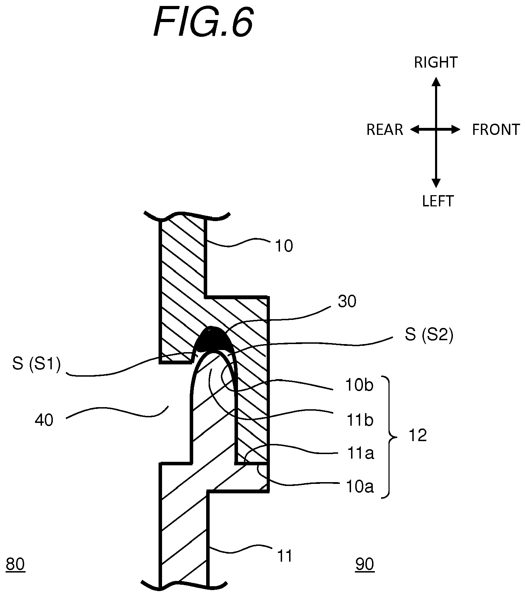

Fig. 6 is an explanatory cross-sectional view taken along the line Y-Y in Fig. 3 with the evaporator cover 11 added thereto. Although a basic configuration is the same as that of the joint portion 12 illustrated in Fig. 5, the configuration in Fig. 6 is different in that part of the case body 10 is notched and a communicating portion 40 is provided. With the provision of the communicating portion 40, the internal space 80 and the inner void S1 communicate with each other to an extent that water can move without causing the capillary action. In other words, the ventilation resistance and the water circulation resistance are set to be low.

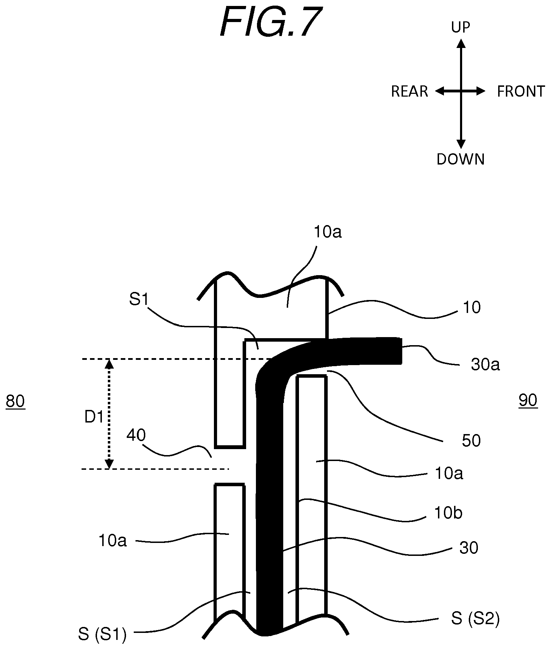

Fig. 7 illustrates a portion indicated by a reference sign E in Fig. 3 in an enlarged scale, and is an explanatory drawing illustrating a portion of the rod-shaped sealing member 30 in the vicinity of an end portion on one side 30a. The parting plane 10a of the case body includes the depressed groove 10b that holds the sealing member 30 therein. The depressed groove 10b is provided at an upper end portion thereof with an output portion 50 that communicates the depressed groove 10b with the external space 90. The sealing member 30 extends from the output portion 50 to the external space 90, and the end portion on one side 30a is exposed to the external space 90. Accordingly, even after assembly of the evaporator cover 11 to the case body 10, whether or not the sealing member 30 is held in the interior of the joint portion 12 may be easily confirmed.

The output portion 50 has a circular shape or a shape equivalent thereto. A cross-sectional area of the output portion 50 is set to be smaller than the cross-sectional area of the sealing member 30. Accordingly, even when an internal pressure of the internal space 80 of the unit case C varies and the variations in internal pressure is propagated to the output portion 50 through the communicating portion 40, a flow of air between the internal space 80 and the external space 90 is prevented since the sealing member 30 is compressed by the output portion 50, whereby the ventilation resistance and the water circulation resistance at the output portion 50 are increased. The ventilation resistance and the water circulation resistance are higher at the output portion 50 than those at the communicating portion 40.

In Fig. 7, the communicating portion 40 is provided at a distance D1 below the output portion 50. The communicating portion 40 is provided below the output portion 50 and the communicating portion 40 and the output portion 50 are disposed in a crank shape in this manner. Therefore, even when the internal pressure of the internal space 80 varies and the inner void S1 has an effect of a motive pressure from the communicating portion 40, the effect on the output portion 50 may be reduced, and further reliable prevention of the flow of the air between the internal space 80 and the external space 90 is achieved.

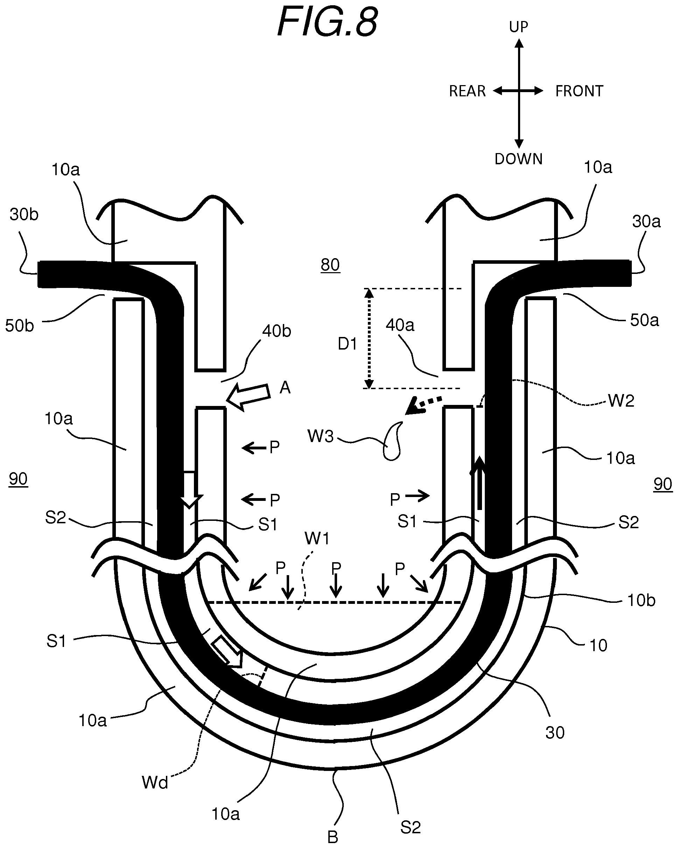

Fig. 8 is a schematic diagram illustrating the vehicle air-conditioning apparatus of the first embodiment of the invention. Referring now to Fig. 8, a behavior that occurs when the internal pressure of part of the internal space 80 of the unit case C rises abruptly will be described.

The internal pressure of the internal space 80 rises first, and a pressure P is applied to the inside of the joint portion 12. It is assumed in this case that the pressure in the internal space 80, specifically on the left side (the other side) of Fig. 8, has risen instantaneously. Then, air A (air flowing into the inner void) flows into the inner void S1 via a communicating portion 40b. The air A then flows downward in the inner void S1 (hollow arrows), and pushes water introduced to the bottom portion B of the joint portion 12 from a water level W1 to a water level Wd. The water pushed out by the air A rises (black solid arrow) in the inner void S1 on the right side (one side) of Fig. 8, and reaches a communicating portion 40a. The pushed water now tries to proceed to either one of a route to be discharged from the communicating portion 40a to the internal space 80 or a route proceeding toward an output portion 50a. Since the ventilation resistance and the water circulation resistance at the output portion 50a are high, water does not reach the output portion 50a and is discharged from the communicating portion 40a to the internal space 80 as indicated by a reference sign W3.

Since the sealing member 30 is held in the interior of the joint portion 12 in a compressed manner during this behavior, movement of water from the inner void S1 to the outer void S2 does not occur. Therefore, the water is prevented from leaking out to the external space 90 even when the internal pressure of the internal space 80 varies.

The case where the pressure of the internal space 80, specifically the pressure on the left side (the other side) in Fig. 8 rises has been described in conjunction with Fig. 8. However, in a case where the pressure on the right side (one side) in Fig. 8 rises, a laterally inverted behavior occurs, and a leak of the water to the external space 90 is prevented.

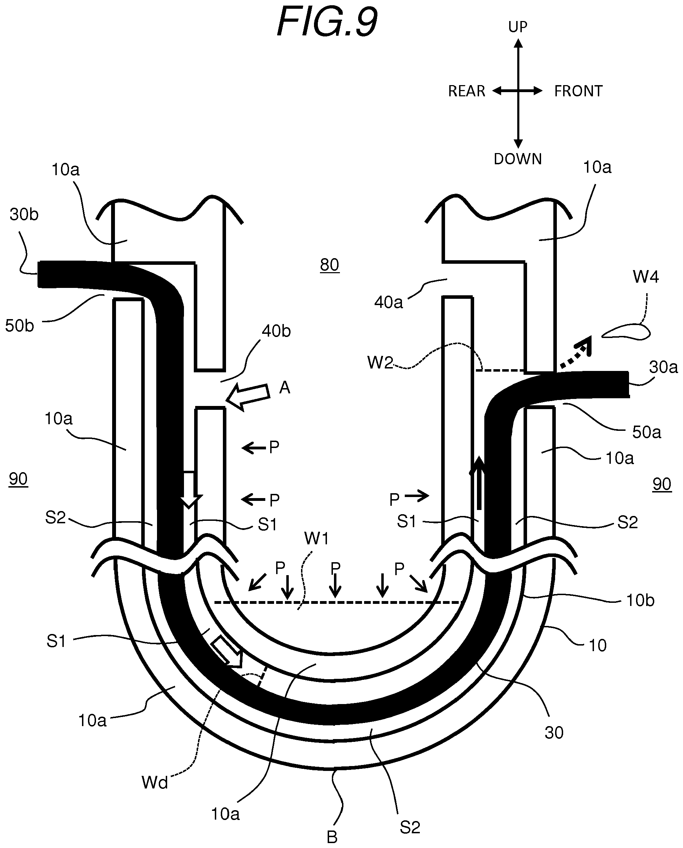

Fig. 9 is a schematic diagram illustrating a comparative example for comparison with the invention. Fig. 9 is different from the schematic diagram of Fig. 8 in that the output portion 50a is provided below the communicating portion 40a. The behavior that occurs in a configuration in Fig. 9 is the same as that in Fig. 8 in that the internal pressure of the internal space 80 rises, the air A flows into the inner void S1 and pushes the water introduced to the bottom portion B of the joint portion, and thus the water rises in the inner void S1 on one side.

However, in the configuration in Fig. 9, the output portion 50a is provided below the communicating portion 40a, and thus water reaches the position of the output portion 50a as indicated by the water level W2. As described above, even with the configuration in which the sealing member 30 is led out from the output portion 50 in the compressed manner, water may ooze out to the external space by the capillary action as indicated by a reference sign W4. According to the comparative example illustrated in Fig. 9, prevention of a water leak is not ensured, and thus the communicating portion 40a needs to be provided below the output portion 50a as illustrated in Fig. 7 and Fig. 8.

### Second Embodiment

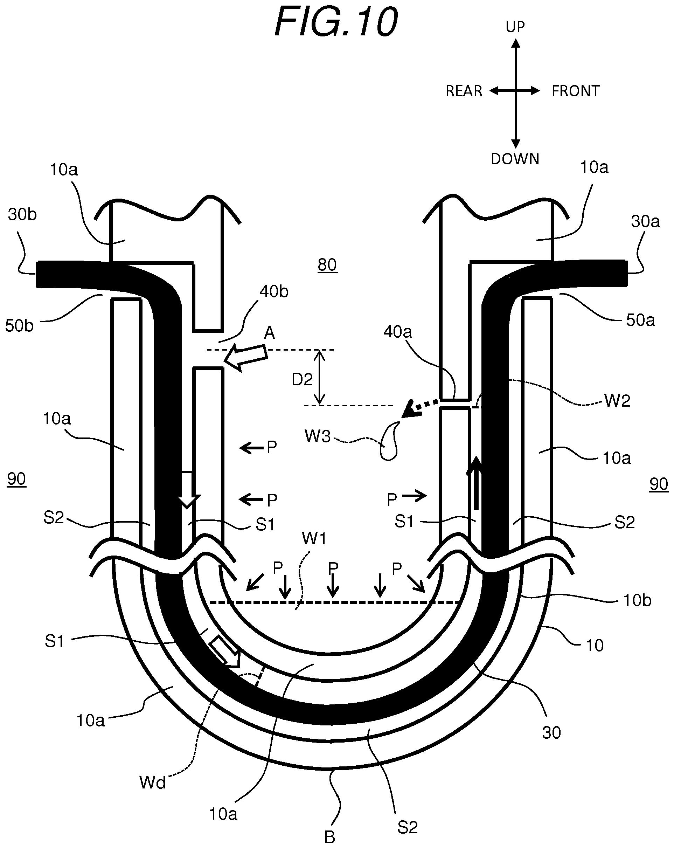

Fig. 10 is a schematic diagram illustrating a vehicle air-conditioning apparatus of a second embodiment of the invention. There are two points different from the first embodiment illustrated in Fig. 8. A first different point is that a cross-sectional area of the communicating portion on one side 40a is smaller than that of the communicating portion on the other side 40b, and a second different point is that the communicating portion on one side 40a is provided below the communicating portion on the other side 40b.

First of all, the first different point will be described. The communicating portion on one side 40a illustrated in Fig. 10 is illustrated to be smaller in cross-sectional area than the communicating portion on the other side 40b. More specifically, the communicating portion on one side 40a is provided to be higher in ventilation resistance than the communicating portion on the other side 40b. In this configuration, even though the internal pressure of the internal space 80 rises unevenly, a change in pressure via the communicating portion on one side 40a can hardly be propagated to the inner void S1. Therefore, even though the water is discharged from the communicating portion 40, the discharging portion may always be set to the communicating portion 40a as indicated by the reference sign W3. In the vehicle air-conditioning apparatus 1, since electronic components such as an electric heat generating apparatus or an ion generator are disposed on the downstream side of the evaporator 20, prevention of splash of liquidized water is desired. Therefore, the water discharging portion is provided at a position farther from the electronic components to enhance reliability of the vehicle air-conditioning apparatus 1.

Subsequently, the second different point will be described. The communicating portion on one side 40a illustrated in Fig. 10 is provided at a distance D2 below the communicating portion on the other side 40b. In this configuration, the water can easily be discharged from the communicating portion on one side 40a provided below. As described in the first different point, even though the internal pressure of the internal space 80 rises unevenly, reliability of the vehicle air-conditioning apparatus 1 may be improved always as the communicating portion 40a as indicated by the reference sign W3.

The first different point and the second different point have been described separately thus far. However, the configuration in which both of the two different points are reflected is further preferable as illustrated in Fig. 10. Further improvement of the reliability of the vehicle air-conditioning apparatus 1 is achieved.

### Third Embodiment

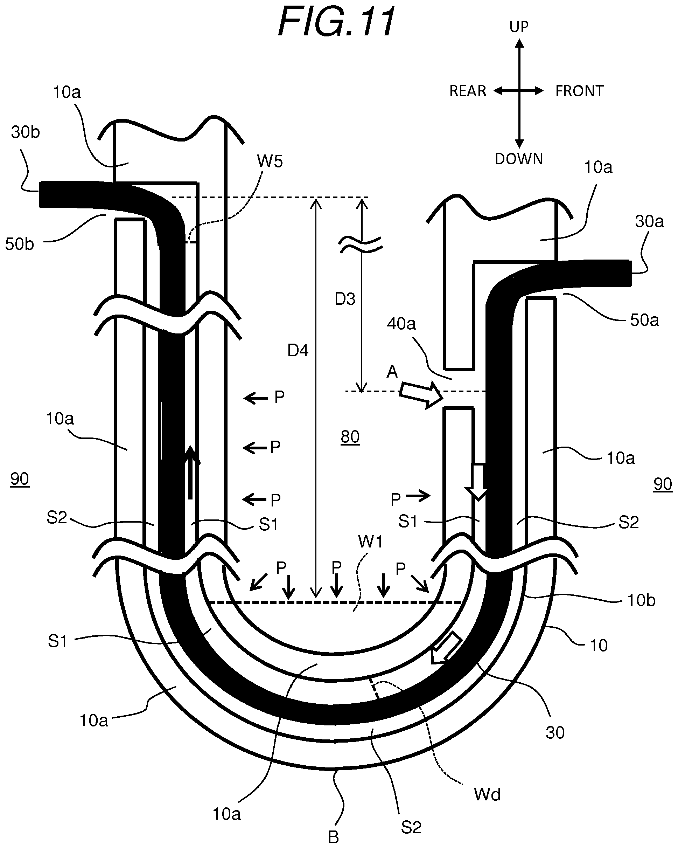

Fig. 11 is a schematic diagram illustrating a vehicle air-conditioning apparatus of a third embodiment of the invention. There are two different points from the first embodiment illustrated in Fig. 8. A first different point is that the output portion 50a on one side is provided below the output portion 50b on the other side, and a second different point is that the communicating portion is provided only as the communicating portion on one side 40a and is not provided on the other side (the left side of Fig. 11).

By providing the communicating portion 40a on the lower side of the output portion 50 in this manner while reflecting the first and second different points, water introduced, for example, into the inner void S1 due to variations in internal pressure may rise on one side (right side in the drawing) of the inner void S1 and be discharged from the communicating portion 40a. In contrast, the output portion on the other side 50b is at a distance D4 higher than the water level W1 before an occurrence of the variation in internal pressure, that is, is approximately at a distance D3 higher than the communicating portion on one side 40a even though the water introduced into the inner void S1 rises on the other side (the left side of Fig. 11) of the inner void S1. Therefore, the water may be prevented from reaching the output portion 50b as indicated by a reference sign W5 with high probability. In the case where the communicating portion on the other side cannot be provided because of a constraint relating to the water discharge portion toward an injection mold or the internal space, easy confirmation of missing of the sealing member and prevention of a water leak to the external space are achieved by employing the third embodiment.

Although the mode in which the evaporator cover 11 is mounted on a side surface of the case body 10 has been described as an example thus far, modification without departing from the gist of the invention is included within a range of the invention as a matter of course. For example, in contrast to the embodiments illustrated in the drawings, the invention may be applied to vehicle air-conditioning apparatuses having a configuration in which the case body 10 is provided with a projecting portion and the evaporator cover 11 is provided with a depressed groove, or a configuration in which the case body 10 is composed of a plurality of sub cases each having a vertical parting plane, so that rain water and condensed water are pooled on the joint portion of the parting planes.

The vehicle air-conditioning apparatus of the invention may be manufactured industrially, and may be an object for commercial dealings. Therefore, the vehicle air-conditioning apparatus has an economical value and is industrially applicable.

### Reference Sign List

1 vehicle air-conditioning apparatus
1a part of vehicle air-conditioning apparatus (lower portion of evaporator cover)
10 case member (case body)
10a parting plane (parting plane of case body)
10b depressed groove
11 case member (evaporator cover)
11a parting plane (parting plane of evaporator cover)
11b projecting portion
12 joint portion
20 evaporator
30 rod-shaped sealing member
30a end portion on one side of the sealing member
30b end portion on the other side of the sealing member
40 communicating portion
40a communicating portion on one side
40b communicating portion on the other side
50 output portion
50a output portion on one side
50b output portion on the other side
80 internal space
90 external space
A air flowing into inner void
Aq rainwater, condensed water, and the like
B bottom portion of joint portion
C unit case
E part of vehicle air-conditioning apparatus (vicinity of output portion)
S void
S1 inner void
S2 outer void
P internal pressure (internal pressure in unit case)
W1 water level
W2 water level
W3 discharged water
W4 discharged water
W5 water level
Wd water level
D1 distance
D2 distance
D3 distance

## Claims

1. A vehicle air-conditioning apparatus (1) comprising:
a unit case (C) having an internal space (80) and formed by assembling a plurality of case members (10,11) each including a vertical parting plane (10a, 11a);
a joint portion (12) including a depressed groove (10b) provided on the parting plane (10a) of one of the case members (10) and a projecting portion (11b) provided on the parting plane (11a) of the other case member (11) and to be inserted into the depressed groove (10b); and
a rod-shaped sealing member (30) disposed on a bottom portion (B) and in an interior of the joint portion (12) in a compressed manner, and **characterised in that**,
the unit case (C) includes: an output portion (50) that communicates the depressed groove (10b) with an external space (90) to the unit case, and leads ends (30a, 30b) of the rod-shaped sealing member (30) out to the external space (90), and
a communicating portion (40) that communicates the depressed groove (10b) with the internal space (80) and is provided below the output portion (50).

2. The vehicle air-conditioning apparatus according to Claim 1, wherein
the communicating portion (40) includes: the communicating portion on one side (40a) provided on one side of the bottom portion (B) of the joint portion (12) and the communicating portion on the other side (40b) provided on the other side thereof, and ventilation resistance at the communicating portion on one side (40a) is higher than that at the communicating portion on the other side (40b).

3. The vehicle air-conditioning apparatus according to Claim 1 wherein
the communicating portion (40) includes the communicating portion on one side (40a) provided on one side of the bottom portion (B) of the joint portion (12) and the communicating portion on the other side (40b) provided on the other side thereof, and
the communicating portion on one side (40a) is provided below the communicating portion on the other side (40b)

4. The vehicle air-conditioning apparatus according to Claim 1, wherein
the output portion (50) includes an output portion on the other side (50b) provided on the other side of the bottom portion (B) of the joint portion (12), the communicating portion (40) includes the communicating portion on one side (40a) provided on one side of the bottom portion (B) of the joint portion (12), and
the communicating portion on one side (40a) is provided below the output portion on the other side (50b).

5. The vehicle air-conditioning apparatus according to Claim 1, wherein
the output portion (50) includes an output portion on one side (50a) provided on one side of the bottom portion (B) of the joint portion (12) and the output portion on the other side (50b) provided on the other side thereof,
the communicating portion (40) includes the communicating portion on one side (40a) provided on one side of the bottom portion (B) of the joint portion and the communicating portion on the other side (40b) provided on the other side thereof,
the communicating portion on one side (40a) is provided below the output portion on one side (50a), and
the communicating portion on the other side (40b) is provided below the output portion on the other side (50b).

6. The vehicle air-conditioning apparatus according to any one of Claims 1 to 5, wherein
a portion between the output portion (50) and the sealing member (30) has a higher ventilation resistance than the communicating portion (40).

7. The vehicle air-conditioning apparatus according to any one of Claims 1 to 6, wherein
the joint portion (12) and the sealing member (30) define an inner void (S1) on the internal space side with respect to the sealing member (30), and
the communicating portion (40) is provided so as to communicate the inner void with the internal space (80).

## Patentansprüche

1. Fahrzeugklimatisierungsvorrichtung (1), die Folgendes umfasst:
ein Anlagengehäuse (C), das einen Innenraum (80) aufweist und durch Zusammensetzen mehrerer Gehäuseglieder (10, 11), die jeweils eine vertikale Teilungsebene (10a, 11a) umfassen, gebildet wird;
einen Gelenkabschnitt (12), der eine vertiefte Nut (10b) umfasst und auf der Teilungsebene (10a) eines der Gehäuseglieder (10) vorgesehen ist, und einen vorragenden Abschnitt (11b), der auf der Teilungsebene (11a) des anderen Gehäuseglieds (11) und zum Einführen in die vertiefte Nut (10b) vorgesehen ist; und
ein stangenförmiges Dichtungsglied (30), das in einem unteren Abschnitt (B) und im Inneren des Gelenkabschnitts (12) zusammengedrückt angeordnet ist,
und **dadurch gekennzeichnet, dass** das Anlagengehäuse (C) Folgendes umfasst: einen Ausgangsabschnitt (50), der die vertiefte Nut (10b) mit einem Außenraum (90) des Anlagengehäuses verbindet und Enden (30a, 30b) des stangenförmigen Dichtungsglieds (30) zu dem Außenraum (90) hinaus führt, und
einen Verbindungsabschnitt (40), der die vertiefte Nut (10b) mit dem Innenraum (80) verbindet und unterhalb des Ausgangsabschnitts (50) vorgesehen ist.

2. Fahrzeugklimatisierungsvorrichtung nach Anspruch 1, wobei
der Verbindungsabschnitt (40) Folgendes umfasst: den Verbindungsabschnitt auf einer Seite (40a), der auf einer Seite des unteren Abschnitts (B) des Gelenkabschnitts (12) vorgesehen ist, und den Verbindungsabschnitt auf der anderen Seite (40b), der auf der anderen Seite davon vorgesehen ist, und
der Entlüftungswiderstand an dem Verbindungsabschnitt auf einer Seite (40a) höher als jener an dem Verbindungsabschnitt auf der anderen Seite (40b) ist.

3. Fahrzeugklimatisierungsvorrichtung nach Anspruch 1, wobei
der Verbindungsabschnitt (40) den Verbindungsabschnitt auf einer Seite (40a), der auf einer Seite des unteren Abschnitts (B) des Gelenkabschnitts (12) vorgesehen ist, und den Verbindungsabschnitt auf der anderen Seite (40b), der auf der anderen Seite davon vorgesehen ist, umfasst und
der Verbindungsabschnitt auf einer Seite (40a) unterhalb des Verbindungsabschnitts auf der anderen Seite (40b) vorgesehen ist.

4. Fahrzeugklimatisierungsvorrichtung nach Anspruch 1, wobei
der Ausgangsabschnitt (50) einen Ausgangsabschnitt auf der anderen Seite (50b), der auf der anderen Seite des unteren Abschnitts (B) des Gelenkabschnitts (12) vorgesehen ist, umfasst,
der Verbindungsabschnitt (40) den Verbindungsabschnitt auf einer Seite (40a), der auf einer Seite des unteren Abschnitts (B) des Gelenkabschnitts (12) vorgesehen ist, umfasst und der Kommunikationsabschnitt auf einer Seite (40a) unterhalb des Ausgangsabschnitts auf der anderen Seite (50b) vorgesehen ist.

5. Fahrzeugklimatisierungsvorrichtung nach Anspruch 1, wobei
der Ausgabeabschnitt (50) einen Ausgabeabschnitt auf einer Seite (50a), der auf einer Seite des unteren Abschnitts (B) des Gelenkabschnitts (12) vorgesehen ist, und den Ausgabeabschnitt auf der anderen Seite (50b), der auf der anderen Seite davon vorgesehen ist, umfasst,
der Verbindungsabschnitt (40) den Verbindungsabschnitt auf einer Seite (40a), der auf einer Seite des unteren Abschnitts (B) des Gelenkabschnitts vorgesehen ist, und den Verbindungsabschnitt auf der anderen Seite (40b), der auf der anderen Seite davon vorgesehen ist, umfasst,
der Verbindungsabschnitt auf einer Seite (40a) unterhalb des Ausgangsabschnitts auf einer Seite (50a) vorgesehen ist und
der Verbindungsabschnitt auf der anderen Seite (40b) unterhalb des Ausgangsabschnitts auf der anderen Seite (50b) vorgesehen ist.

6. Fahrzeugklimatisierungsvorrichtung nach einem der Ansprüche 1-5, wobei
ein Abschnitt zwischen dem Ausgangsabschnitt (50) und dem Dichtungsglied (30) einen höheren Entlüftungswiderstand als der Verbindungsabschnitt (40) aufweist.

7. Fahrzeugklimatisierungsvorrichtung nach einem der Ansprüche 1-6, wobei
der Gelenkabschnitt (12) und das Dichtungsglied (30) einen inneren Leerraum (S1) auf der Seite des Innenraums bezüglich des Dichtungsglieds (30) definieren und
der Verbindungsabschnitt (40) dahingehend vorgesehen ist, den inneren Leerraum mit dem Innenraum (80) zu verbinden.

## Revendications

1. Appareil de climatisation (1) pour véhicules comprenant :
un carter d'unité (C) comportant un espace intérieur (80) et formé en assemblant une pluralité d'éléments de carter (10, 11) comprenant chacun un plan de division vertical (10a, 11a) ;
une partie raccord (12) comprenant une rainure en renfoncement (10b) placée sur le plan de division (10a) de l'un des éléments de carter (10) et une partie saillante (11b) placée sur le plan de division (11a) de l'autre élément de carter (11) et destinée à être insérée dans la rainure en renfoncement (10b) ; et
un élément d'étanchéité (30) en forme de tige, disposé sur une partie fond (B) et à l'intérieur de la partie raccord (12) d'une manière comprimée, et **caractérisé en ce que**
le carter d'unité (C) comprend : une partie de sortie (50) qui relie la rainure en renfoncement (10b) à un espace extérieur (90) vis-à-vis du carter d'unité, et qui mène des extrémités (30a, 30b) de l'élément d'étanchéité (30) en forme de tige vers l'extérieur jusqu'à l'espace extérieur (90), et
une partie de communication (40) qui relie la rainure en renfoncement (10b) à l'espace intérieur (80) et est placée sous la partie de sortie (50).

2. Appareil de climatisation pour véhicules selon la revendication 1, dans lequel
la partie de communication (40) comprend : la partie de communication d'un côté (40a) placée sur un côté de la partie fond (B) de la partie raccord (12) et la partie de communication de l'autre côté (40b) placée sur l'autre côté de celle-ci, et une résistance à la ventilation au niveau de la partie de communication d'un côté (40a) est supérieure à celle au niveau de la partie de communication de l'autre côté (40b).

3. Appareil de climatisation pour véhicules selon la revendication 1, dans lequel
la partie de communication (40) comprend la partie de communication d'un côté (40a) placée sur un côté de la partie fond (B) de la partie raccord (12) et la partie de communication de l'autre côté (40b) placée sur l'autre côté de celle-ci, et la partie de communication d'un côté (40a) est placée sous la partie de communication de l'autre côté (40b) .

4. Appareil de climatisation pour véhicules selon la revendication 1, dans lequel
la partie de sortie (50) comprend une partie de sortie de l'autre côté (50b) placée sur l'autre côté de la partie fond (B) de la partie raccord (12), la partie de communication (40) comprend la partie de communication d'un côté (40a) placée sur un côté de la partie fond (B) de la partie raccord (12), et
la partie de communication d'un côté (40a) est placée sous la partie de sortie de l'autre côté (50b) .

5. Appareil de climatisation pour véhicules selon la revendication 1, dans lequel
la partie de sortie (50) comprend une partie de sortie d'un côté (50a) placée sur un côté de la partie fond (B) de la partie raccord (12) et la partie de sortie de l'autre côté (50b) placée sur l'autre côté de celle-ci,
la partie de communication (40) comprend la partie de communication d'un côté (40a) placée sur un côté de la partie fond (B) de la partie raccord et la partie de communication de l'autre côté (40b) placée sur l'autre côté de celle-ci,
la partie de communication d'un côté (40a) est placée sous la partie de sortie d'un côté (50a), et
la partie de communication de l'autre côté (40b) est placée sous la partie de sortie de l'autre côté (50b).

6. Appareil de climatisation pour véhicules selon l'une quelconque des revendications 1 à 5, dans lequel
une partie entre la partie de sortie (50) et l'élément d'étanchéité (30) présente une résistance à la ventilation supérieure à celle de la partie de communication (40).

7. Appareil de climatisation pour véhicules selon l'une quelconque des revendications 1 à 6, dans lequel
la partie raccord (12) et l'élément d'étanchéité (30) définissent un vide intérieur (S1) du côté de l'espace intérieur par rapport à l'élément d'étanchéité (30), et
la partie de communication (40) est placée de façon à relier le vide intérieur à l'espace intérieur (80).
